# EUROPEAN PATENT APPLICATION

(11) **EP 1 768 314 A1**
(43) Date of publication of application: **28.03.2007**
(21) Application number: 05291968.5
(22) Date of filing: 22.09.2005
(51) Int. Cl.: H04L 12/28, H04L 12/26, H04L 29/06, G06F 17/30, G06F 11/34

(54) **Access nodes for giving a client device access to an internet network**

(71) Applicant: Alcatel, 75008 Paris (FR)
(72) Inventor: Cautereels, Paul Henri Marie, 2880 Hingene (BE); Beck, Michaël Andries Thomas, 2170 Merksem, (Antwerpen) (BE); Vermeiren, Tim, 9240 Zele (BE); Dequeker, Hans Maurice Felix Corneel, 3020 Herent (BE); Gyselings, Tim, 2100 Deurne (Antwerpen) (BE)
(74) Representative: Narmon, Gisèle Marie Thérèse

(57) **Abstract**

Access nodes (1) for giving client devices (2,3) access to internet networks (5) comprise detectors (11) for detecting request messages in client information defining requests for receiving media contents and are provided with with processors (12) for processing detections of the request messages for gathering statistical information about the media contents. The statistical information comprises viewing figures per media content. Further request messages in the client information define further requests for finishing receptions of the media contents for gathering further statistical information. The further statistical information comprises timing figures per media content. Data messages define client data with respect to the media contents for gathering yet further statistical information. The yet further statistical information comprises appreciation figures and/or yet further viewing figures per media content. The access nodes (1) are further provided with couplers (14) and controllers (13) for controlling the couplers (14) for supplying a same media content to several client devices (2,3) simultaneously. The client information comprises internet group management protocol messages such as join messages and leave messages.

## Description

The invention relates to an access node for giving a client device access to an internet network, the access node comprising
- a client-side receiver for receiving client information from the client device,
- a network-side transmitter for transmitting the client information to a server device via the internet network,
- a network-side receiver for receiving server information from the server device via the internet network,
- a client-side transmitter for transmitting the server information to the client device, and
- a detector for detecting a request message in the client information, which request message defines a request for receiving a media content.
   Examples of such an access node are digital subscriber line access multiplexers and optical fiber aggregators / fiber terminators and digital loop carriers.Technical Background of the Invention.
   A prior art access node is of common general knowledge and gives a client device such as a personal computer or a modem access to an internet network. The access node comprises a client-side receiver for receiving client information such as an upstream message from the client device and a network-side transmitter for transmitting the client information to a server device via the internet network. The access node further comprises a network-side receiver for receiving server information such as a downstream message from the server device via the internet network and a client-side transmitter for transmitting the server information to the client device.
   A user at the client device may select an address of a website and send the upstream message comprising the selected address of the website to the server device for ordering a content of this website. The server device generates the downstream message comprising the content of the website in response to a reception of the selected address of the website. The client device receives this content and may display it via a display.
   Alternatively, the user at the client device may select an address of a storage location of a video stream and send the upstream message comprising the selected address of the storage location of the video stream to the server device for ordering this video stream. The server device generates one or more downstream messages comprising the video stream in response to a reception of the selected address of the storage location. The client device receives this video stream and may display it via a display.
   The prior art access node further comprises a detector for detecting a request message in the client information, which request message defines a request for receiving a media content. Such a detection of the request message is for example used for controlling a coupler such as a so-called cross connect.
   The known access node is disadvantageous, inter alia, owing to the fact that it plays a relatively passive role. The known access node only gives a client device access to an internet network for receiving a media content such as a website content or a video stream from a server device.
   It is an object of the invention, inter alia, to provide an access node as defined in the preamble that plays a relatively active role.
   The access node according to the invention is characterized in that the access node further comprises
- a processor for processing a detection of the request message for gathering statistical information about the media content.
   By introducing the processor in the access node according to the invention, the access node has got the capability of gathering statistical information about a media content as requested via a request defined by the request message. As a result, the access node according to the invention plays a more active role. Such an access node allows an owner / operator of this access node to provide an additional service to an owner / operator of the server device and allows the owner / operator of the server device to outsource the gathering of statistical information to the owner / operator of the access node.
   The access node according to the invention is further advantageous, inter alia, in that its location is the most efficient location for gathering statistical information about a media content, owing to the fact that of all network nodes the access node is located closest to the client device.
   It should be noted that the invention is not limited to an access node that in an upstream direction receives and forwards a request message and that in a downstream direction receives and forwards a requested media content. The invention may alternatively comprise an access node that in an upstream direction receives and forwards a request message, whereby a requested media content is supplied via an alternative downstream direction such as a cable network not comprising the access node or such as a satellite network not comprising the access node.
   An embodiment of the access node according to the invention is characterized in that the statistical information comprises a viewing figure per media content.
   Especially for a media content in the form of a video stream, such as a live video stream or a recorded video stream representing a television program or a video on demand program, viewing figures are of the utmost importance, such as overview figures and average figures and such as absolute numbers and relative numbers of client devices via which client devices the video stream has been requested.
   An embodiment of the access node according to the invention is characterized in that the detector is arranged to detect a further request message in the client information, which further request message defines a further request for finishing a reception of the media content and in that the processor is arranged to process a detection of the further request message for gathering further statistical information about the media content.
   A further request message allows further statistical information to be gathered. Especially a combination of the request message and the further request message allows extended statistical information to be gathered. This extended statistical information may comprise more information than a sum of the statistical information and the further statistical information.
   An embodiment of the access node according to the invention is characterized in that the further statistical information comprises a timing figure per media content.
   Especially for a media content in the form of a video stream, such as a live video stream or a recorded video stream representing a television program or a video on demand program, timing figures are of the utmost importance, such as overview points of time and average points of time and such as absolute points of time and relative points of time at which the client devices have received the video stream and such as overview time-intervals and average time-intervals and such as absolute time-intervals and relative time-intervals during which the client devices have received the video stream.
   An embodiment of the access node according to the invention is characterized in that the detector is arranged to detect a data message originating from the client device, which data message defines client data with respect to the media content and in that the processor is arranged to process a detection of the data message for gathering yet further statistical information about the media content.
   A data message originating from the client device differs from the request message and the further request message in that the request message and the further request message are generated to start and stop receiving the media content where the data message is generated to inform the owner of the access node (in which case the data message does not need to be forwarded to the server device) and/or the owner of the server device (in which case the data message must be forwarded to the server device).
   An embodiment of the access node according to the invention is characterized in that the yet further statistical information about the media content comprises an appreciation figure and/or a yet further viewing figure per media content.
   Especially for a media content in the form of a video stream, such as a live video stream or a recorded video stream representing a television program or a video on demand program, appreciation figures such as absolute appreciations and relative appreciations and/or further viewing figures such as absolute numbers and relative numbers of users viewing the video stream via one and the same client device may give important information in addition to the viewing figures and the timing figures.
   An embodiment of the access node according to the invention is characterized in that the server information comprises the media content.
   Preferably, the request message and the media content in response to the request message will be supplied via the same access node and via the same internet network, owing to the fact that this is the simplest solution.
   An embodiment of the access node according to the invention is characterized in that the access node further comprises
- a further client-side receiver for receiving further client information from a further client device,
- a further client-side transmitter for transmitting further server information to the further client device,
- a controller for controlling a coupler for coupling the network-side receiver to the client-side transmitters in response to having detected that the request message in the client information on the one hand and a request in the further client information on the other hand define requests for receiving the same media content.

According to this extremely advantageous embodiment, firstly, in response to the request message in the client information, the media content is supplied via the internet network and the access node to the client device. Secondly (for example a little later), in response to a request message in further client information originating from a further client device connected to the same access node, it is detected in the access node that both request messages define requests for receiving the same media content. As a result, the request message in the further client information is not forwarded to the server device, but the controller in the access node controls the coupler such that the same media content is supplied to both client devices simultaneously. In other words, the controller in the access node controls the coupler such that the same media content is multicasted to both client devices. Under these circumstances the internet network is used efficiently, but the owner of the server device can no longer gather statistical information at the server device, owing to the fact that the request message in the further client information is no longer forwarded. Fortunately, this doesn't matter, owing to the fact that the access node according to the invention will gather the statistical information.

An embodiment of the access node according to the invention is characterized in that the client information comprises an internet group management protocol message.

An embodiment of the access node according to the invention is characterized in that the access node comprises a digital subscriber line access multiplexer or an optical fiber aggregator / fiber terminator or a digital loop carrier.

The request message might for example correspond with a join message and the further request message might for example correspond with a leave message. The internet group management protocol is for example disclosed in US 6,847,638. Other protocols are not to be excluded, such as operating-system-company protocols.

Other documents that mention the internet group management protocol are for example USApp 2004/0244058 and USApp 2003/0231629. USApp 2004/0031052 discloses an information platform for coupling a cable television network and an internet network. US 6,553,515 discloses a diagnostic supervision of an internet network. Neither one of these documents discloses nor points into a direction of the invention.

The invention also relates to a module for use in the access node as defined above, which module according to the invention is characterized in that the module comprises
- the processor for processing the detection of the request message for gathering the statistical information about the media content.
   The invention also relates to a method for giving a client device access to an internet network, the method comprising the steps of
- receiving client information from the client device,
- transmitting the client information to a server device via the internet network,
- receiving server information from the server device via the internet network,
- transmitting the server information to the client device, and
- detecting a request message in the client information, which request message defines a request for receiving a media content,
   which method according to the invention is characterized in that the method further comprises the step of
- processing a detection of the request message for gathering statistical information about the media content.
   The invention also relates to a computer program product for giving a client device access to an internet network, the computer program product comprising the functions of
- receiving client information from the client device,
- transmitting the client information to a server device via the internet network,
- receiving server information from the server device via the internet network,
- transmitting the server information to the client device, and
- detecting a request message in the client information, which request message defines a request for receiving a media content,
   which computer program product according to the invention is characterized in that the computer program product further comprises the function of
- processing a detection of the request message for gathering statistical information about the media content.

The invention also relates to a medium comprising the computer program product as defined above.

Embodiments of the module according to the invention and of the method according to the invention and of the computer program product according to the invention and of the medium according to the invention correspond with the embodiments of the access node according to the invention. The module according to the invention can be produced and/or sold separately from the access node according to the invention.

The invention is based upon an insight, inter alia, that the prior art access node plays a relatively passive role and that it should play a more active role. The invention is based upon a basic idea, inter alia, that statistical information about a media content can be gathered in the access node by processing a detection of a request message in the client information, which request message defines a request for receiving the media content.

The invention solves the problem, inter alia, to provide an access node that plays a relatively active role. The access node according to the invention is further advantageous, inter alia, in that its location is the most efficient location for gathering statistical information about a media content, owing to the fact that of all network nodes the access node is located closest to the client device.

These and other aspects of the invention will be apparent from and elucidated with reference to the embodiments(s) described hereinafter.

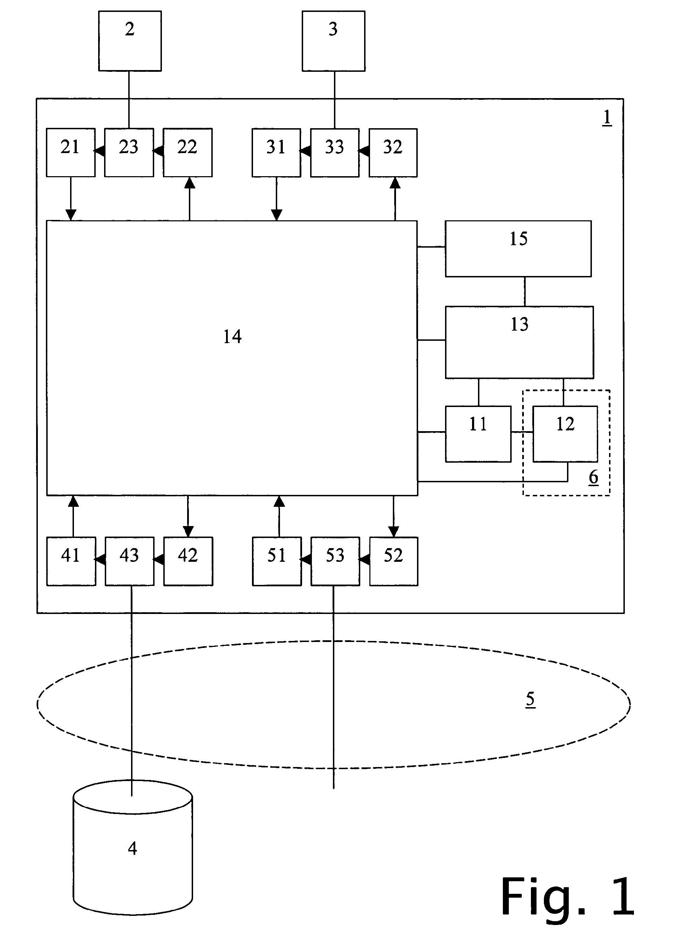

Fig. 1 shows diagrammatically an access node according to the invention coupled to a server device via an internet network and connected to client devices.

The access node 1 according to the invention shown in Fig. 1 comprises a client-side receiver 21 for receiving client information from a client device 2 via a client interface 23 coupled to (connected to) the client device 2 and comprises a client-side transmitter 22 for transmitting server information to the client device 2 via the client interface 23. The client-side receiver 21 and the client-side transmitter 22 are coupled to (connected to) a coupler 14.

The access node 1 further comprises a further client-side receiver 31 for receiving further client information from a further client device 3 via a further client interface 33 coupled to (connected to) the further client device 3 and comprises a further client-side transmitter 32 for transmitting server information to the further client device 3 via the further client interface 33. The further client-side receiver 31 and the further client-side transmitter 32 are coupled to (connected to) the coupler 14.

The access node 1 also comprises a network-side transmitter 42 for transmitting the client information to a server device 4 via a network interface 43 coupled to (connected to) the server device 4 via an internet network 5 and comprises a network-side receiver 41 for receiving the server information from the server device 4 via the network interface 43 and the internet network 5.

The access node 1 further also comprises a further network-side transmitter 52 for transmitting information to a device not shown via a further network interface 53 coupled to (connected to) the device not shown via the internet network 5 and comprises a further network-side receiver 51 for receiving information from the device not shown via the further network interface 53 and the internet network 5.

The coupler 14 is further coupled to (connected to) a controller 13 for controlling the coupler 14 and is further coupled to (connected to) a detector 11 and a processor 12 that are both coupled to (connected to) each other and the controller 13. The coupler 14 is further coupled to (connected to) a memory 15 that is further coupled to (connected to) the controller 13. The processor 12 may form part of a module 6 according to the invention.

In a prior art situation, the processor 12 is not present, and the access node 1 plays a relatively passive role. The access node 1 only gives the client devices 2 and 3 access to the internet network 5 for receiving a media content such as a website content or a video stream from the server device 4. Thereto, the access node 1 comprises the detector 11 for detecting a request message in the client information, which request message defines a request for receiving a media content. Such a detection of the request message is for example used for controlling the coupler 14 such as a so-called cross connect.

To give the access node 1 a more active role, the access node 1 according to the invention is provided with the processor 12 for processing a detection of the request message for gathering statistical information about the media content. As a result, the access node 1 according to the invention has got the capability of detecting a request message and of gathering statistical information about a media content as requested via a request defined by the request message.

The location of the access node 1 is the most efficient location for gathering statistical information about a media content, owing to the fact that of all network nodes the access node 1 is located closest to the client device 2. The requested media content may alternatively be supplied via an alternative route such as a cable network not shown and coupled to (connected to) the client device 2 via an other node than the access node or such as a satellite network not shown and coupled to (connected to) the client device 2 via an other node than the access node.

The statistical information for example comprises a viewing figure per media content. Especially for a media content in the form of a video stream, such as a live video stream or a recorded video stream representing a television program or a video on demand program, viewing figures are of the utmost importance. Different figures may be collected, such as overview figures, average figures, absolute numbers and relative numbers.

The detector 11 is preferably arranged to detect a further request message in the client information, which further request message defines a further request for finishing a reception of the media content and the processor 12 is preferably arranged to process a detection of the further request message for gathering further statistical information about the media content, to allow further statistical information to be gathered. Especially a combination of the request message and the further request message allows extended statistical information to be gathered.

The further statistical information for example comprises a timing figure per media content. Especially for a media content in the form of a video stream, such as a live video stream or a recorded video stream representing a television program or a video on demand program, timing figures are of the utmost importance. Different figures may be collected, such as overview points of time, average points of time, absolute points of time, relative points of time, overview time-intervals, average time-intervals, absolute time-intervals and relative time-intervals.

The detector 11 is preferably arranged to detect a data message originating from the client device 2, which data message defines client data with respect to the media content and the processor 12 is preferably arranged to process a detection of the data message for gathering yet further statistical information about the media content. Such a data message does not need to be forwarded to the server device 4 but may be forwarded to the server device 4.

The yet further statistical information about the media content for example comprises an appreciation figure and/or a yet further viewing figure per media content. Especially for a media content in the form of a video stream, such as a live video stream or a recorded video stream representing a television program or a video on demand program, appreciation figures such as absolute appreciations and relative appreciations and/or further viewing figures such as absolute numbers and relative numbers of users viewing the video stream via one and the same client device 2 may give important information in addition to the viewing figures and the timing figures already discussed.

Preferably, the request message and the media content in response to the request message will be supplied via the same access node 1 and via the same internet network 5, owing to the fact that this is the simplest solution. Then, the server information comprises the media content.

Preferably, the controller 13 is arranged to control the coupler 14 such that the network-side receiver 41 is coupled to (connected to) the client-side transmitters 22 and 32 in response to having detected that the request message in the client information on the one hand and a request in the further client information on the other hand define requests for receiving the same media content. Thereto, for example the memory 15 is used to store the request messages per client device 2,3, and the controller 13 for example has the capability to compare new request messages with the ones already stored.

Firstly, in response to the request message in the client information, the media content is supplied via the internet network 5 and the access node 1 to the client device 2. Secondly (for example a little later), in response to a request message in the further client information originating from the further client device 3 coupled to (connected to) the same access node 1, it is detected in the access node 1 that both request messages define requests for receiving the same media content. As a result, the request message in the further client information is not forwarded to the server device 4, but the controller 13 in the access node 1 controls the coupler 14 such that the same media content is supplied to both client devices 2 and 3 simultaneously. In other words, the controller 13 in the access node 1 controls the coupler 14 such that the same media content is multicasted to both client devices 2 and 3. Under these circumstances the internet network 5 is used efficiently, but the owner of the server device 4 can no longer gather statistical information at the server device, owing to the fact that the request message in the further client information is no longer forwarded. But this doesn't matter, owing to the fact that the access node 1 according to the invention will gather this statistical information. This is an extremely advantageous embodiment that can be used for a media content in the form of a website content under the condition that users at the client devices 2 and 3 are interested in this website content (relatively) simultaneously and can be used for a media content in the form of a video stream, such as a live video stream or a recorded video stream representing a television program or a video on demand program under the condition that users at the client devices 2 and 3 are interested in this television program or video on demand program (relatively) simultaneously.

The access node 1 comprises for example a digital subscriber line access multiplexer or an optical fiber aggregator / fiber terminator or a digital loop carrier. The client information comprises for example an internet group management protocol message. The request message might for example correspond with a join message and the further request message might for example correspond with a leave message.

The client information and the server information form for example parts of signals comprising layer-1 information, layer-2 information, layer-3 information or internet protocol information, layer-4 information, layer-5 information, layer-6 information and layer-7 information etc. The internet protocol and/or the internet network may be IPv4 related and/or IPv6 related.

The request message forms for example part of the layer-4 information or of the layer-5 information. The request message has for example a fixed position in the client information or in the signal or comprises for example a message identifier defining the message to be a request message. The request message may further have a client identifier defining the client device or such a client identifier forms part of another part of the information or of the signal or such a client identifier is derived from the input / output port (read: the client interface) used for communication with this client device. Therefore, a detection of a request message may comprise a detection of the request message at a fixed position in the client information or in the signal and/or may comprise a detection of a message identifier and/or may comprise a detection of a client identifier in the request message or in another part of the information or of the signal and/or may comprise a detection of a client identifier through a derivation from the input / output port (read: the client interface) used for communication with this client device.

The combination of the (client-side or network-side) receiver, the (client or network) interface and the (client-side or network-side) transmitter is an arbitrary one, alternatively the interface may be partly located in the receiver and the transmitter or the receiver, the interface and the transmitter may be combined into a transceiver / interface. Buffers may be present in the receiver, the interface, the transmitter and/or the coupler. This coupler may be bi-directional with both directions being for example multiplexed in time or may be uni-directional with separate directions being for example available simultaneously.

The media content may comprise a website content or a video stream or an audio stream or a mixture of two or more of the possibilities. The module 6 according to the invention may be produced and/or sold separately from the access node according to the invention and may further comprise the detector 11 and/or the controller 13 and/or the memory 15 etc.

In Fig. 1, each coupling / connection may be a wired coupling /connection or a wireless coupling / connection. Any unit shown may be divided into sub-units, and any two or more units may be integrated into a new and larger unit. Any unit shown may comprise hardware and/or software. The computer program product according to the invention may be stored on and/or comprise a fixed medium such as the memory 15 or a removable medium not shown.

The expression "for" in for example "for giving", "for receiving", "for transmitting", "for detecting" and "for processing" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude a possible presence of one or more pluralities.

The steps and/or functions of receiving, transmitting, detecting and processing do not exclude further steps and/or functions, like for example, inter alia, the steps and/or functions described for the Figure etc.

## Claims

1. Access node (1) for giving a client device (2) access to an internet network (5), the access node (1) comprising
- a client-side receiver (21) for receiving client information from the client device (2),
- a network-side transmitter (42) for transmitting the client information to a server device (4) via the internet network (5),
- a network-side receiver (41) for receiving server information from the server device (4) via the internet network (5),
- a client-side transmitter (22) for transmitting the server information to the client device (2), and
- a detector (11) for detecting a request message in the client information, which request message defines a request for receiving a media content,
**characterized in that** the access node (1) further comprises
- a processor (12) for processing a detection of the request message for gathering statistical information about the media content.

2. Access node (1) as defined in claim 1, **characterized in that** the statistical information comprises a viewing figure per media content.

3. Access node (1) as defined in claim 1 or 2, **characterized in that** the detector (11) is arranged to detect a further request message in the client information, which further request message defines a further request for finishing a reception of the media content and **in that** the processor (12) is arranged to process a detection of the further request message for gathering further statistical information about the media content.

4. Access node (1) as defined in claim 3, **characterized in that** the further statistical information comprises a timing figure per media content.

5. Access node (1) as defined in any one of claims 1, 2, 3 or 4,
**characterized in that** the detector (11) is arranged to detect a data message originating from the client device (2), which data message defines client data with respect to the media content and **in that** the processor (12) is arranged to process a detection of the data message for gathering yet further statistical information about the media content.

6. Access node (1) as defined in claim 5, **characterized in that** the yet further statistical information about the media content comprises an appreciation figure and/or a yet further viewing figure per media content.

7. Access node (1) as defined in any one of claims 1-6,
**characterized in that** the server information comprises the media content.

8. Access node (1) as defined in claim 7, **characterized in that** the access node (1) further comprises
- a further client-side receiver (31) for receiving further client information from a further client device (3),
- a further client-side transmitter (32) for transmitting further server information to the further client device (3),
- a controller (13) for controlling a coupler (14) for coupling the network-side receiver (41) to the client-side transmitters (22,32) in response to having detected that the request message in the client information on the one hand and a request in the further client information on the other hand define requests for receiving the same media content.

9. Access node (1) as defined in any one of claims 1-8,
**characterized in that** the client information comprises an internet group management protocol message.

10. Access node (1) as defined in any one of claims 1-9,
**characterized in that** the access node (1) comprises a digital subscriber line access multiplexer or an optical fiber aggregator / fiber terminator or a digital loop carrier.

11. Module (6) for use in the access node (1) as defined in any one of claims 1-10, **characterized in that** the module (6) comprises
- the processor (12) for processing the detection of the request message for gathering the statistical information about the media content.

12. Method for giving a client device (2) access to an internet network (5), the method comprising the steps of
- receiving client information from the client device (2),
- transmitting the client information to a server device (4) via the internet network (5),
- receiving server information from the server device (4) via the internet network (5),
- transmitting the server information to the client device (2), and
- detecting a request message in the client information, which request message defines a request for receiving a media content,
**characterized in that** the method further comprises the step of
- processing a detection of the request message for gathering statistical information about the media content.

13. Computer program product for giving a client device (2) access to an internet network (5), the computer program product comprising the functions of
- receiving client information from the client device (2),
- transmitting the client information to a server device (4) via the internet network (5),
- receiving server information from the server device (4) via the internet network (5),
- transmitting the server information to the client device (2), and
- detecting a request message in the client information, which request message defines a request for receiving a media content,
**characterized in that** the computer program product further comprises the function of
- processing a detection of the request message for gathering statistical information about the media content.

14. Medium comprising the computer program product as defined in claim 13.
